# EUROPEAN PATENT APPLICATION

(11) **EP 4 524 003 A1**
(43) Date of publication of application: **19.03.2025**
(21) Application number: 24196315.6
(22) Date of filing: 23.08.2024
(51) Int. Cl.: B62D 25/08, B60R 19/12, B60R 19/48

(54) **VEHICLE STRUCTURE**

(30) Priority: 15.09.2023 JP 2023150383; 29.03.2024 JP 2024057050
(71) Applicant: Suzuki Motor Corporation, Shizuoka 432-8611 (JP)
(72) Inventor: OKURA, Kohei, HAMAMATSU-SHI, 432-8611 (JP); KAWAHARA, Shunya, HAMAMATSU-SHI, 432-8611 (JP)
(74) Representative: Plasseraud IP

(57) **Abstract**

[Problem to be Solved] To reduce displacement of a sensor peripheral part.

[Solution] A vehicle structure 2 includes an outer panel 4 configured to form a design surface on an outer side of a vehicle and supported by a vehicle structural body 3 of a vehicle 1, a reinforcing member 5 configured to reinforce the outer panel 4 from a back surface side of the outer panel 4, a sensor device 9 mounted on the reinforcing member 5 and configured to sense an external environment of the vehicle, and a low rigidity member 6 having rigidity lower than rigidity of the vehicle structural body 3 and disposed adjacent to the reinforcing member 5, and a sensor peripheral part 20 which is a portion of the reinforcing member 5 on a periphery of the sensor device 9 is coupled to the low rigidity member 6.

## Description

### [Technical Field]

The present invention relates to a vehicle structure of an automobile or the like, and more specifically, relates to a vehicle structure for the front part or the rear part of a vehicle.

### [Background Art]

The front part and the rear part of a vehicle, such as an automobile, are provided with outer panels (also referred to as exterior members), such as a bumper and a grill, which form the design surface on the outer side of the vehicle. There may be cases in which a sensor device is disposed on the back surface side of the outer panel, the sensor device sensing (detecting) the external environment of the vehicle by using a camera, radar, ultrasonic waves, or the like.

As one example of a vehicle structure having a structure for disposing a sensor device at the front part of a vehicle, a vehicle structure described in Patent Literature 1 is known. In the vehicle structure described in Patent Literature 1, a radar antenna is mounted on a frame member that reinforces the panel member of a front grille from the back surface side.

### [Citation List]

### [Patent Literature]

[Patent Literature 1] JP 2021-059268 A

### [Summary of Invention]

### [Problems to be Solved by the Invention]

In the case in which the panel member is reinforced by a reinforcing member, such as the frame member, from the back surface side as in the case of the vehicle structure disclosed in Patent Literature 1, the reinforcing member is formed of a member, such as a thin metal plate or a resin molded product, to absorb impact in a collision. As a result, there are limitations to providing rigidity to the reinforcing member.

In the case in which a radar antenna is mounted on the frame member having limitations described above, there is a possibility that a portion of the frame member on the periphery of the radar antenna will be elastically deformed due to vibrations during travel and impacts such as minor collisions, so that the position of the radar antenna is displaced due to the elastic deformation of the portion on the periphery of the radar antenna. As a result, sensing accuracy of the radar antenna may decrease.

The present invention has been made under such circumstances, and it is an object of the present invention to provide a vehicle structure that can reduce displacement of a sensor peripheral part of a reinforcing member which reinforces an outer panel.

### [Means for Solving the Problems]

According to one mode of the present invention, a vehicle structure is provided including: an outer panel configured to form a design surface on an outer side of a vehicle and supported by a vehicle structural body of the vehicle; a reinforcing member configured to reinforce the outer panel from a back surface side of the outer panel; and a sensor device mounted on the reinforcing member and configured to sense an external environment of the vehicle, the vehicle structure being characterized in that the vehicle structure includes a low rigidity member having rigidity lower than rigidity of the vehicle structural body, and disposed adjacent to the reinforcing member, and a sensor peripheral part which is a portion of the reinforcing member on a periphery of the sensor device is coupled to the low rigidity member.

### [Advantageous Effects of Invention]

According to one mode of the present invention, it is possible to provide a vehicle structure that can reduce displacement of a sensor peripheral part of a reinforcing member which reinforces an outer panel.

### [Brief Description of Drawings]

[Figure 1] Figure 1 is a perspective view of a vehicle structure according to an embodiment of the present invention as viewed from the front side.
[Figure 2A] Figure 2A is a perspective view of a state in which an outer panel and bumper faces are removed from the vehicle structure, as viewed from the front side.
[Figure 2B] Figure 2B is a side view of the state in which the outer panel and the bumper faces are removed from the vehicle structure.
[Figure 3] Figure 3 is a front view showing the state in which the outer panel and the bumper faces are removed from the vehicle structure.
[Figure 4] Figure 4 is an enlarged perspective view of a reinforcing member of the vehicle structure as viewed from the back side.
[Figure 5] Figure 5 is a back view of the vehicle structure.
[Figure 6] Figure 6 is a perspective view of a low rigidity member of the vehicle structure as viewed from the front side.
[Figure 7] Figure 7 is an enlarged perspective view of the center of the vehicle structure in the vehicle width direction as viewed from the back side.
[Figure 8] Figure 8 is a cross-sectional view taken along A-A in Figure 3.
[Figure 9] Figure 9 is a cross-sectional view taken along B-B in Figure 5.
[Figure 10] Figure 10 is a cross-sectional view taken along C-C in Figure 5.
[Figure 11] Figure 11 is a cross-sectional view taken along D-D in Figure 5.

### [Mode for Carrying Out the Invention]

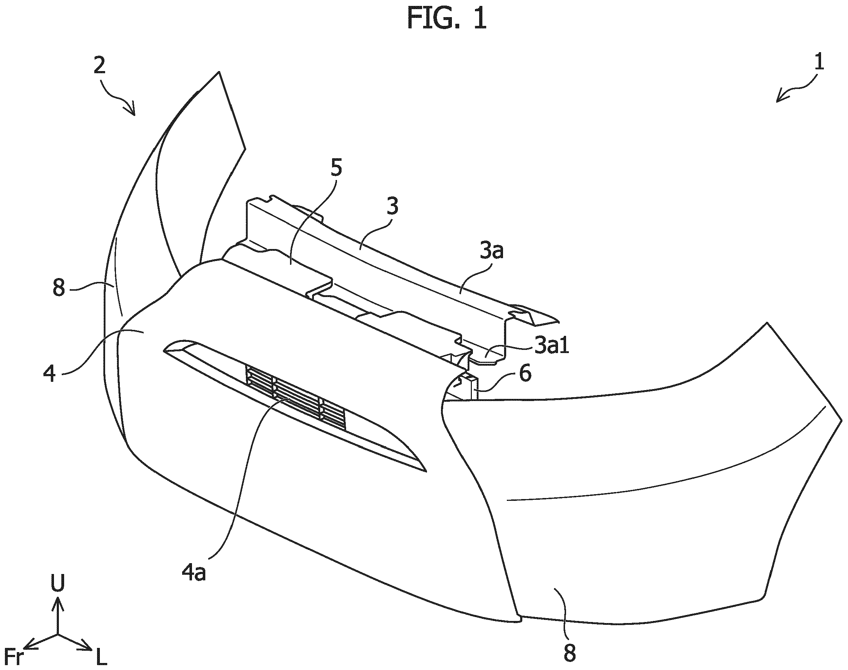

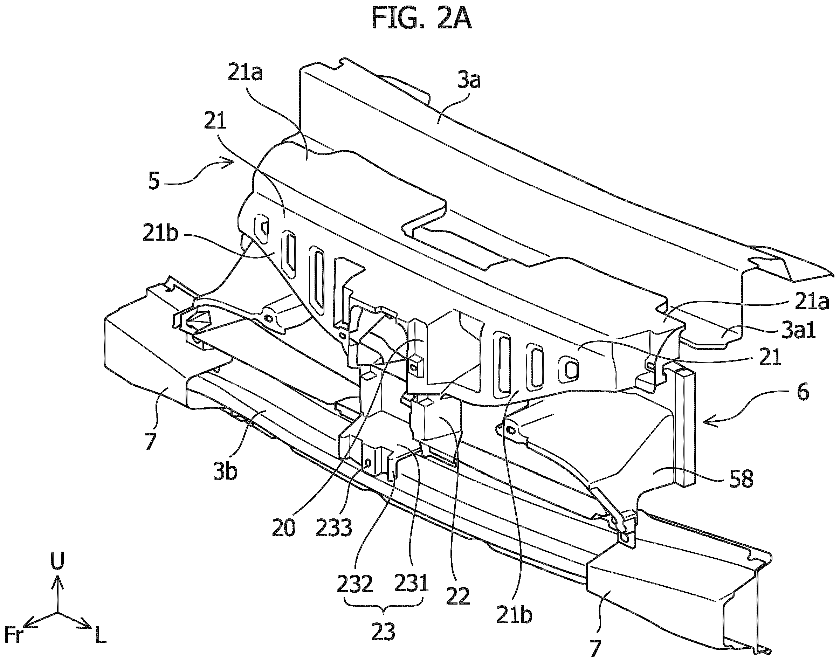

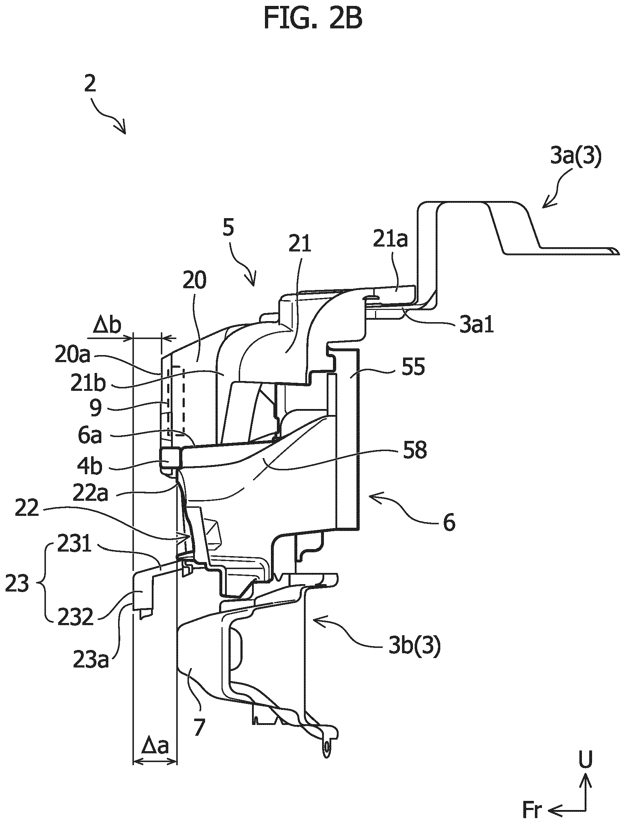

Hereinafter, an embodiment of the present invention will be described with reference to drawings. Figure 1 is a perspective view of a vehicle structure 2 of a vehicle 1 according to one embodiment of the present invention as viewed from the front side, Figure 2A is a perspective view of a state in which an outer panel 4 and bumper faces 8 are removed from the vehicle structure 2, as viewed from the front side, and Figure 2B is a side view of the state in which the outer panel 4 and the bumper faces 8 are removed from the vehicle structure 2. In the present embodiment, the vehicle structure 2 is used as the structure for the front part of the vehicle 1. In the drawings, the direction of an arrow Fr indicates the front side in a front-rear direction of the vehicle 1 (hereinafter referred to as the front-rear direction), the direction of an arrow L indicates the left side in the vehicle width direction of the vehicle 1 (hereinafter referred to as the vehicle width direction) when the vehicle 1 is viewed from the rear side toward the front side, and the direction of an arrow U indicates the upper side in the up-down direction of the vehicle 1 (hereinafter referred to as the up-down direction). In the description made hereinafter, in the vehicle structure 2 for the front part of the vehicle 1, in the front-rear direction, "outer side" indicates the front side, "back side" indicates the rear side, "outer surface" indicates the front surface, and "back surface" indicates the rear surface. There may be cases in which "outer side" is described as "front side", "outer surface" is described as "front side surface", "back side" is described as "inner side", and "back surface" is described as "inner surface". When a cross section is shown, a cross section taken along a plane along the horizontal direction is taken as "transverse cross section", and a cross section taken along a plane perpendicular to the horizontal direction is taken as "longitudinal cross section".

The vehicle structure 2 will be described with reference to Figure 1, Figure 2A, and Figure 2B. The vehicle structure 2 includes a vehicle structural body 3 configured to form a portion of the vehicle body structure for the front part of the vehicle 1, the outer panel 4 configured to form the design surface on the outer side of the vehicle for the front part of the vehicle 1 and supported by the vehicle structural body 3, a reinforcing member 5 configured to reinforce the outer panel 4 from the back surface side of the outer panel 4, a sensor device 9 mounted on the reinforcing member 5, and a low rigidity member 6 disposed adjacent to the reinforcing member 5.

The vehicle structural body 3 supports the outer panel 4 from the back surface side of the outer panel 4. The vehicle structural body 3 is a member made of steel and having high rigidity. The vehicle structural body 3 includes a first vehicle body frame member 3a extending in the vehicle width direction and disposed on the upper side, and a second vehicle body frame member 3b disposed at a position lower than the first vehicle body frame member 3a and extending in the vehicle width direction. The second vehicle body frame member 3b is disposed parallel to the first vehicle body frame member 3a in such a way as to be located forward of the first vehicle body frame member 3a in the vehicle front-rear direction.

The vehicle structural body 3 supports the upper part and the lower part of the outer panel 4. In the example shown in the drawing, the upper part of the outer panel 4 is supported by the first vehicle body frame member 3a, and the lower part of the outer panel 4 is supported by the second vehicle body frame member 3b.

To be more specific, the first vehicle body frame member 3a has a substantially hat shape in cross section, and extends in the vehicle width direction. Side reinforcing part upper walls 21a described later of the reinforcing member 5 are coupled to the upper surface of a front flange 3a1 of the first vehicle body frame member 3a. The upper part of the outer panel 4 is coupled to the front parts of the side reinforcing part upper walls 21a, so that the upper part of the outer panel 4 is supported by the first vehicle body frame member 3a via the reinforcing member 5.

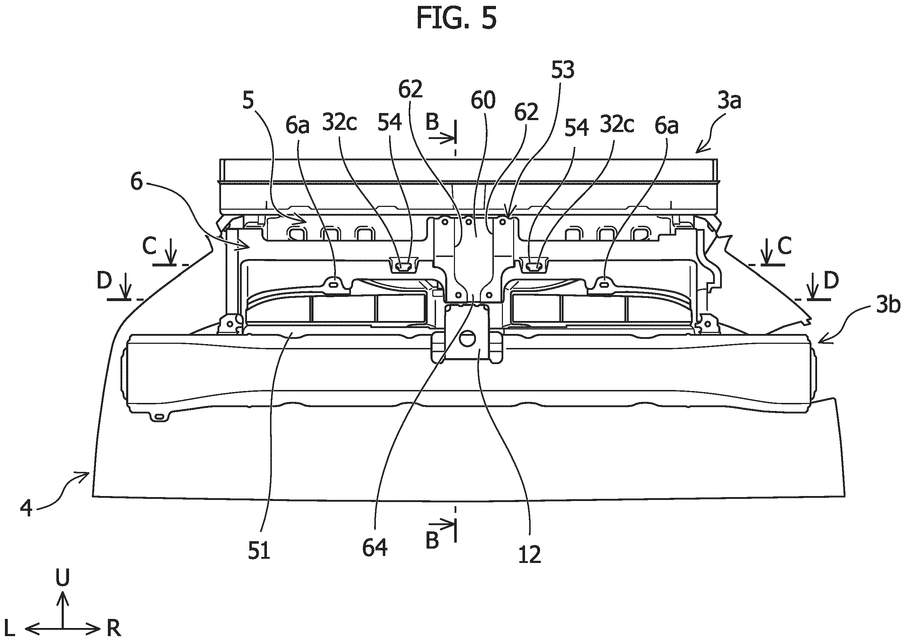

A support bracket 12 (see Figure 5 described later) is mounted at the upper center of the second vehicle body frame member 3b in the vehicle width direction, and the center lower part (in the example shown in the drawing, a lower support part 22 described later) of the reinforcing member 5 is coupled to the support bracket 12, and is supported by the support bracket 12 from below. The lower part of the outer panel 4 is coupled to the lower front part (in the example shown in the drawing, a protruding end wall 232 described later) of the reinforcing member 5, so that the lower part of the outer panel 4 is supported by the second vehicle body frame member 3b via the reinforcing member 5 and the support bracket 12.

The impact absorbing members 7 (see Figure 2A) are mounted on the front side surfaces of both end portions in the vehicle width direction of the second vehicle body frame member 3b, which are the surfaces on the side facing the outer panel 4, the impact absorbing members 7 having a substantially groove shape that is open rearward in longitudinal cross section. The impact absorbing member 7 is made of a thin steel plate. The rigidity of the impact absorbing member 7 is lower than the rigidity of the vehicle structural body 3 (more specifically, the second vehicle body frame member 3b). The impact absorbing member 7 is a member that absorbs impacts caused by collisions when a colliding object collides with the vehicle 1 from the front side of the vehicle 1. In the vehicle structure 2 for the front side of the vehicle 1, the low rigidity member 6 is an air guide for guiding traveling airflow during traveling to a predetermined place.

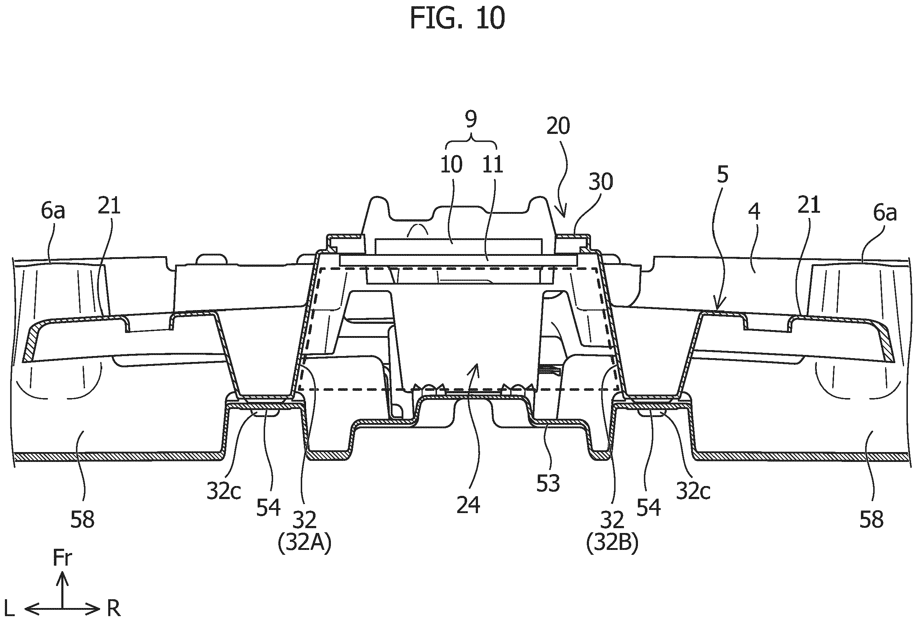

The sensor device 9 includes a sensor 10, and a sensor bracket 11 configured to support the sensor 10 and is formed into a thin plate shape (see Figure 10). The sensor 10 is a sensor body that senses (detects) the external environment of the vehicle, and the sensor 10 emits (transmits) or receives sensing waves (detection waves), which are used to sense the external environment of the vehicle. For the sensor 10, a millimeter wave radar, which uses electromagnetic waves in the millimeter wave band as sensing waves, a sonic wave sensor (ultrasonic sensor/sonar), which uses sonic waves as sensing waves, a camera (imaging device), which uses electromagnetic waves in the visible light band or electromagnetic waves in the infrared band as sensing waves, or any other sensor is used. Sensing waves are not limited to being transmitted from the sensor 10. Sunlight may be used as sensing waves, and sensing waves may be transmitted from a sensing wave transmitter provided as a separate body from the sensor 10.

The outer panel 4 is a member that forms the outer design surface for the front part of the vehicle 1, and extending in the vehicle width direction. The outer panel 4 is an injection molded product made of a resin, and is a thin large panel expanding in a wide area in the vehicle width direction. Therefore, the rigidity of the outer panel 4 is lower than the rigidity of the vehicle structural body 3. A front grille 4a is provided at the center of the outer panel 4 in the vehicle width direction, and has a plurality of vent holes. The upper side of the outer panel 4 is supported by the first vehicle body frame member 3a via the reinforcing member 5, and the lower side of the outer panel 4 is supported by the second vehicle body frame member 3b via the impact absorbing members 7. The bumper faces 8 are disposed at both end portions of the outer panel 4 in the vehicle width direction. Front lamps (headlamps), not shown in the drawing, that illuminate a region in front of the vehicle 1 are provided to the bumper faces 8. The bumper faces 8 may be integrally formed with the outer panel 4, or may be formed as separate bodies from the outer panel 4. The bumper faces 8 also form the outer design surface for the front part of the vehicle, and the bumper faces 8 may be included in the elements of the outer panel 4. That is, the bumper faces 8 may be parts of the outer panel 4.

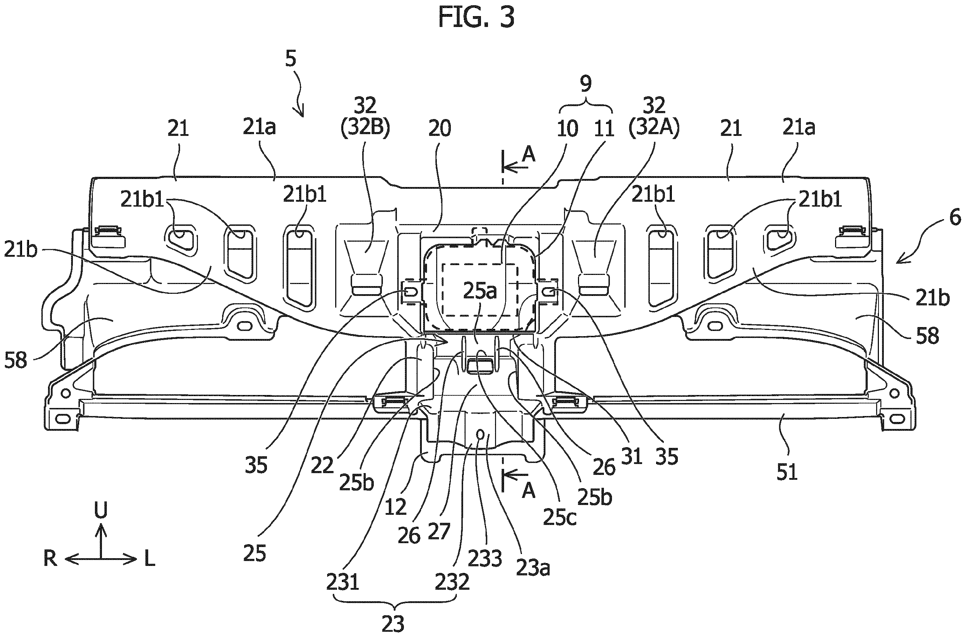

Next, the reinforcing member 5 will be described with reference to Figure 2A, Figure 2B, and Figure 3. Figure 3 is a front view showing the state in which the outer panel 4 and the bumper faces 8 are removed from the vehicle structure 2, and showing the arrangement of the reinforcing member 5 and the low rigidity member 6.

The reinforcing member 5 extending in the vehicle width direction is provided to the back side of the outer panel 4. The reinforcing member 5 reinforces the outer panel 4 from the back surface side of the outer panel 4. The reinforcing member 5 is an injection molded product made of a resin, and the rigidity of the reinforcing member 5 is lower than the rigidity of the vehicle structural body 3. A sensor peripheral part 20, on which the sensor device 9 is mounted, is provided at the center of the reinforcing member 5. In other words, the sensor peripheral part 20 is a portion of the reinforcing member 5 on the periphery of the sensor device 9. Side reinforcing parts 21 extending in the vehicle width direction are provided to both left and right sides of the sensor peripheral part 20 in the vehicle width direction.

The reinforcing member 5 supports the outer panel 4 from below by the side reinforcing parts 21, and supports the outer panel 4 from behind on the front surface side (front side) of the reinforcing member 5, thus reinforcing the outer panel 4 from the back surface side.

The reinforcing member 5 further includes the lower support part 22 and a protruding part 23. The lower support part 22 is a part provided below the sensor peripheral part 20 to support the sensor peripheral part 20 from below. The lower support part 22 is contiguously formed with the lower part of the sensor peripheral part 20. The protruding part 23 protrudes forward from the lower end of the lower support part 22. The protruding part 23 includes a front-rear wall 231 extending forward from the lower end of the lower support part 22, and the protruding end wall 232 extending downward from the front end of the front-rear wall 231, thus forming the front end portion of the protruding part 23. The front surface of the protruding end wall 232 forms a protruding front end surface 23a of the protruding part 23. As shown in Figure 3, the reinforcing member 5 is formed into a T-shape as viewed from the front side, and the sensor peripheral part 20, the lower support part 22, and the protruding part 23 are disposed at the center of the reinforcing member 5 in the vehicle width direction.

As shown in Figure 2B, a front side surface 22a (front surface) of the lower support part 22 which is the surface on the side facing the outer panel 4 is, in the front-rear direction, disposed inward (rearward) of a front side surface 20a (front surface) of the sensor peripheral part 20 which is the surface on the side facing the outer panel 4. The protruding front end surface 23a of the protruding part 23 is the front side surface (front surface) of the protruding part 23, which is the surface on the side facing the outer panel 4, and the protruding front end surface 23a of the protruding part 23 protrudes, in the front-rear direction, toward the outer side (front side), which is the side facing the outer panel 4, relative to the front side surface 20a of the sensor peripheral part 20. The protruding end wall 232 of the protruding part 23 is a portion of the reinforcing member 5 which protrudes the most toward the front side in the front-rear direction. Therefore, a separation dimension Δa in the front-rear direction between the protruding front end surface 23a of the protruding part 23 and the front side surface 22a of the lower support part 22 is larger than a separation dimension Δb in the front-rear direction between the protruding front end surface 23a of the protruding part 23 and the front side surface 20a of the sensor peripheral part 20. That is, the protruding part 23 protrudes from a position on the inner side (rear side) relative to the front side surface 20a of the sensor peripheral part 20. The protruding end wall 232 of the protruding part 23 has a panel fixing hole 233 for coupling and fixing the protruding part 23 to the outer panel 4.

Accordingly, when a colliding object collides with the vehicle 1 from the front side, which is the outer side, of the vehicle 1, the protruding part 23 is liable to receive an impact caused by the collision prior to parts of the reinforcing member 5 that are not the protruding part 23. As a result, the protruding part 23 is deformed before an impact load is applied to the sensor peripheral part 20. Accordingly, impact caused by the collision is absorbed, and hence, displacement of the sensor peripheral part 20 can be reduced.

The separation dimension Δa is larger than the separation dimension Δb. As a result, when a colliding object collides with the vehicle 1 from the front side, which is the outer side, of the vehicle 1, deformation range (deformation stroke) of the protruding part 23 is increased, and the protruding part 23 is deformed before an impact load is applied to the sensor peripheral part 20. As a result, impact caused by the collision is absorbed, and hence, displacement of the sensor peripheral part 20 is effectively reduced.

In the example shown in the drawing, the front-rear wall 231 inclines downward as it is approaching the protruding end wall 232 from the lower support part 22. The inclination direction of the front-rear wall 231 is not limited to the above. The front-rear wall 231 may incline upward as it is approaching the protruding end wall 232 from the lower support part 22.

The front-rear wall 231 inclines downward or upward as it is approaching the protruding part 23 from the lower support part 22, and hence, when a colliding object collides with the vehicle 1 from the front side, which is the outer side, of the vehicle 1, deformation of the protruding part 23 is easily promoted before an impact load is applied to the sensor peripheral part 20. As a result, impact caused by the collision is absorbed, and hence, displacement of the sensor peripheral part 20 is further reduced.

Each side reinforcing part 21 includes the side reinforcing part upper wall 21a supported by the first vehicle body frame member 3a, and a side reinforcing part front wall 21b extending downward from the outer end edge (front end edge), and forming the end edge of the side reinforcing part upper wall 21a on the side facing the outer panel 4. The side reinforcing part 21 has an L-shape in longitudinal cross section. In the example shown in the drawing, a plurality of (three in the example shown in the drawing) through holes 21bl, which are separate from each other in the vehicle width direction are opened in the side reinforcing part front wall 21b. Deformation of the side reinforcing part 21 in a collision is promoted by the plurality of through holes 21b1.

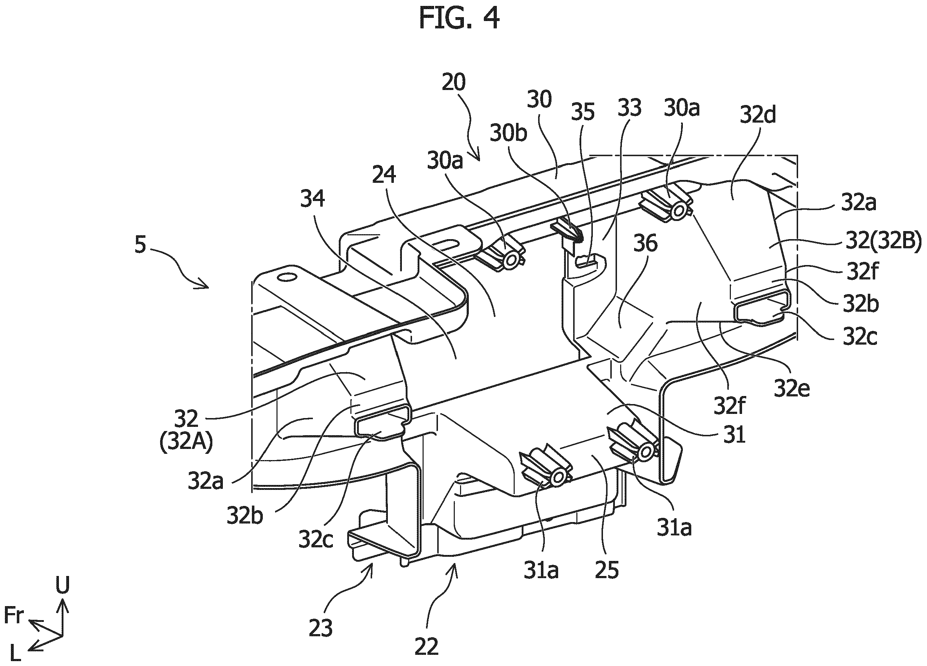

Next, the sensor peripheral part 20 will be described with reference to Figure 2A, Figure 2B, Figure 3, and Figure 4. Figure 4 is an enlarged perspective view of the center of the reinforcing member 5 in the vehicle width direction as viewed from the back side.

The sensor peripheral part 20 includes pairs of facing parts that face each other (in the example shown in the drawing, an upper wall 30 and a lower wall 31, a first side part 32A and a second side part 32B), and a sensor mounting wall 33. In the example shown in the drawing, the sensor peripheral part 20 includes, as the pairs of facing parts, the upper wall 30 and the lower wall 31 disposed in such a way as to face each other in the up-down direction, and the first side part 32A and the second side part 32B disposed in such a way as to face each other in the vehicle width direction. That is, the sensor peripheral part 20 includes two sets of pairs of facing parts that face each other. In more detail, the sensor peripheral part 20 includes an upper wall 30, a lower wall 31, a first side part 32A, a second side part 32B, and a sensor mounting wall 33.

A sensor containing (housing) space 24 is formed in the inside of the sensor peripheral part 20 of the reinforcing member 5, the sensor device 9 being contained (housed) in the sensor containing space 24. The upper wall 30 is disposed above the sensor containing space 24, the lower wall 31 is disposed below the sensor containing space 24, the first side part 32A is disposed on the left of the sensor containing space 24, the second side part 32B is disposed on the right of the sensor containing space 24, and the sensor mounting wall 33 is disposed on the outer side (front side) of the sensor containing space 24, which is the side facing the outer panel 4. The sensor peripheral part 20 is open rearward.

The sensor device 9 (more specifically, the sensor bracket 11) is mounted on the back surface of the sensor mounting wall 33, which is the surface on the side opposite to the surface on the side facing the outer panel 4 (see Figure 10 described later). The sensor device 9 is disposed between the upper wall 30 and the lower wall 31 in the up-down direction, and is disposed between the first side part 32A and the second side part 32B in the vehicle width direction.

A pair of upper connecting parts 30a, which are separate from each other in the vehicle width direction, and a positioning guide 30b located between the pair of upper connecting parts 30a, which are separate from each other in the vehicle width direction, are provided to the back end surface of the upper wall 30, which is the end surface on the side opposite to the end surface on the side facing the outer panel 4. A pair of lower connecting parts 31a, which are separate from each other in the vehicle width direction, are provided to the back end surface of the lower wall 31, which is the end surface on the side opposite to the end surface on the side facing the outer panel 4. Each of the pair of upper connecting parts 30a and the pair of lower connecting parts 31a has a hole for screw fastening. The pair of upper connecting parts 30a and the pair of lower connecting parts 31a are parts provided to be coupled to a coupling part 53, described later, provided to the low rigidity member 6, and the positioning guide 30b is a guide for positioning the coupling part 53 with respect to the sensor peripheral part 20.

The sensor mounting wall 33 has an open part 34 such that portions of the sensor mounting wall 33 are kept on the left and right sides in the vehicle width direction and on the upper side. Sensor fixed parts 35, to which the sensor device 9 (the sensor bracket 11) is fixed, are provided on the back surface of the sensor mounting wall 33 at positions on both left and right sides of the open part 34. The sensor bracket 11 is mounted on the back surface of the sensor mounting wall 33 via the sensor fixed parts 35, and the entirety or a part of the open part 34 is covered by the sensor bracket 11. The sensor 10 of the sensor device 9 emits, through the open part 34, sensing waves that sense the external environment of the vehicle, or the sensor 10 of the sensor device 9 receives sensing waves.

The sensor peripheral part 20 includes adjacent parts 32 each of which is disposed adjacent to the sensor fixed part 35, and extends in the front-rear direction from the back surface of the sensor mounting wall 33. In the example shown in the drawing, the sensor peripheral part 20 includes a left adjacent part 32 extending rearward, and disposed adjacent to the sensor fixed part 35 provided on the left side, and includes a right adjacent part 32 extending rearward, and disposed adjacent to the sensor fixed part 35 provided on the right side. In the example shown in the drawing, the first side part 32A on the left side forms the adjacent part 32 on the left side, and the second side part 32B on the right side forms the adjacent part 32 on the right side. In the example shown in the drawing, the adjacent parts 32 are disposed on the left and right of the sensor device.

The adjacent parts 32 (32A, 32B) bulge in the front-rear direction. Each adjacent part 32 includes a peripheral wall part 32a having a cylindrical shape, and an end wall part 32b located at the rear end of the peripheral wall part 32a, which is the end on the side opposite to the end on the outer panel 4 side. The adjacent part 32 is formed into a recessed shape on the outer surface of the sensor mounting wall 33, which is the surface on the side facing the outer panel 4. A plate-shaped coupling piece 32c extending in the horizontal direction is provided to the end wall part 32b. The peripheral wall part 32a includes an upper peripheral wall part 32d disposed at the upper part, a lower peripheral wall part 32e disposed at the lower part, and left and right vertical peripheral wall parts 32f located between the upper peripheral wall part 32d and the lower peripheral wall part 32e. The upper peripheral wall part 32d inclines downward as it is approaching the end wall part 32b from the back surface of the sensor mounting wall 33, and the lower peripheral wall part 32e inclines upward as it is approaching the end wall part 32b from the back surface of the sensor mounting wall 33. The adjacent part 32 has a bulging structure that bulges in the front-rear direction and hence, the rigidity of the adjacent part 32 is increased, and displacement of the sensor peripheral part 20 is more effectively reduced.

The sensor peripheral part 20 includes connecting walls 36 that connect the lower wall 31, the adjacent parts 32, and the sensor mounting wall 33 to each other. To be more specific, the connecting wall 36 is located at a corner part at which the lower wall 31, the adjacent part 32 (the first side part 32A, the second side part 32B), and the sensor mounting wall 33 intersect with each other, and the connecting wall 36 couples the respective elements (31, 32, 33) to each other at the corner part. As a result, the rigidity is increased at the peripheries of both corner parts disposed on the lower side of the sensor peripheral part 20.

As shown in Figure 2A and Figure 3, the lower support part 22 is provided with a recessed part 25 formed into a recessed shape that is open toward the outer panel 4. The upper side wall of the recessed part 25 is formed of the lower wall 31 of the sensor peripheral part 20. In other words, referring to Figure 4, the recessed part 25 is formed into a bulging shape bulging rearward, and it may thus also be referred to as a bulging part.

Referring to Figure 3, the recessed part 25 is formed of the lower wall 31 of the sensor peripheral part 20, a depth side wall 25a which is the depth wall of the recessed part 25, side walls 25b which are the left and right walls of the recessed part 25, and a recessed-shape-forming lower wall 25c which is the lower wall of the recessed part 25. The recessed part 25 is provided with a plurality of (two in the example shown in the drawing) vertical ribs 26, which are separate from each other in the vehicle width direction, and which extend in the up-down direction. The vertical ribs 26 extend downward from the lower wall 31 along the depth side wall 25a. The two vertical ribs 26 support the lower wall 31 from below. The depth side wall 25a of the recessed part 25 extends downward from the rear end of the lower wall 31, and the pair of lower connecting parts 31a are contiguously formed with the depth side wall 25a. At least one of two vertical ribs 26 is disposed in such a way as to be overlapped on the lower connecting part 31a in the vehicle width direction and the up-down direction. That is, at least one of the two vertical ribs 26 supports the lower connecting part 31a from behind. The two vertical ribs 26 support the lower wall 31 from below, and hence, it is possible to reduce deformation of the sensor peripheral part 20, such as forward inclination or rearward inclination of the sensor 10.

Referring to Figure 4, a portion of the lower support part 22 which is located below the recessed part 25 also bulges rearward to form a lower bulging part 27. That is, the lower support part 22 bulges rearward in two stages. The left and right side walls 25b of the recessed part 25 are coupled by the lower bulging part 27, and hence, the rigidity of the recessed part 25 is increased. The lower parts of the vertical ribs 26 extend to the upper part of the lower bulging part 27, and hence, the rigidity of a portion at which the recessed part 25 and the lower bulging part 27 are connected to each other is increased.

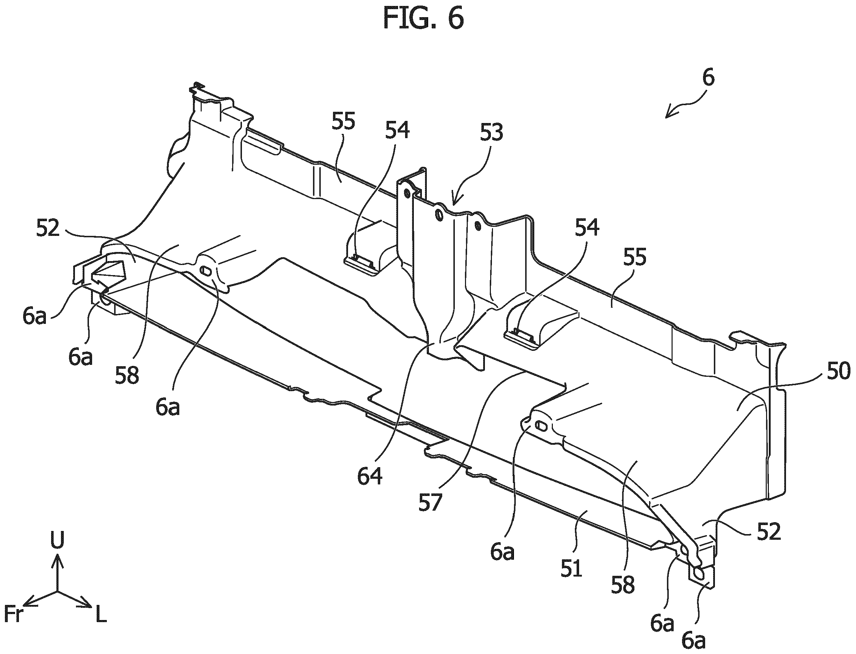

Next, the low rigidity member 6 will be described with reference to Figure 2A, Figure 2B, Figure 3, Figure 5, and Figure 6. Figure 5 is a rear view of the vehicle structure 2. Figure 6 is a perspective view of the low rigidity member 6 as viewed from the front side. As shown in Figure 3, Figure 5, and Figure 6, the low rigidity member 6 extends in the vehicle width direction, and reinforces the reinforcing member 5 from the back surface side of the reinforcing member 5. The low rigidity member 6 is an injection molded product made of a resin. The low rigidity member 6 has rigidity lower than the rigidity of the vehicle structural body 3. The low rigidity member 6 is coupled to the sensor peripheral part 20 of the reinforcing member 5. In other words, the sensor peripheral part 20 is coupled to the low rigidity member 6.

As shown in Figure 6, the low rigidity member 6 includes an upper transverse extension part 50 extending in the vehicle width direction and located at the upper position, a lower transverse extension part 51 located at a lower position than the upper transverse extension part 50 and extending in the vehicle width direction, and left and right vertical extension parts 52 coupling both ends of the upper transverse extension part 50 in the vehicle width direction to both ends of the lower transverse extension part 51 in the vehicle width direction. The low rigidity member 6 is formed into a shape having an opening at the center as viewed from the front side.

The center of the upper transverse extension part 50 in the vehicle width direction is provided with the coupling part 53 connected (coupled) to the sensor peripheral part 20 provided to the reinforcing member 5. The upper transverse extension part 50 is also provided with vertical wall parts 55 erected in the up-down direction from the end edge of the upper transverse extension part 50 on the side, in the front-rear direction, opposite to the side facing the outer panel 4 such that the vertical wall parts 55 extend from both ends of the coupling part 53 in the vehicle width direction to both ends of the upper transverse extension part 50 in the vehicle width direction. The upper transverse extension part 50 includes a cut-out part 57 obtained by cutting out, at the center in the vehicle width direction, the front end side being the outer side, which is the side facing the outer panel 4, and upper side parts 58 disposed on both end sides of the cut-out part 57 in the vehicle width direction. The coupling part 53 and the lower transverse extension part 51 are separate from each other in the up-down direction, and are not coupled to each other. As shown in Figure 2B, each vertical wall part 55 is disposed at a position below the side reinforcing part upper wall 21a of the reinforcing member 5 and on the back side of the side reinforcing part front wall 21b of the reinforcing member 5. As shown in Figure 2A and Figure 3, the upper side parts 58 of the upper transverse extension part 50 are disposed below the side reinforcing parts 21 of the reinforcing member 5. Consequently, an impact load in an offset collision occurring on the upper side can be received by the side reinforcing parts 21, and an impact load in the offset collision occurring on the lower side can be received by the upper side parts 58, and hence, dispersion of the load and absorption of the impact can be achieved. The upper side parts 58 which are parts of the low rigidity member 6 are disposed so as not to overlap, in the up-down direction, on the sensor peripheral part 20, which is provided at the center of the reinforcing member 5 in the vehicle width direction. Consequently, an impact load in a collision occurring on the upper side can be received by the sensor peripheral part 20, and an impact load in the collision occurring on the lower side can be received by the upper side parts 58, and hence, dispersion of the load and absorption of the impact can be achieved. Each upper side part 58 is disposed between the sensor peripheral part 20 of the reinforcing member 5 and the impact absorbing member 7 in the vehicle width direction. Consequently, an impact load in a collision can be received by the sensor peripheral part 20, the upper side parts 58, and the impact absorbing members 7 in a dispersed manner in the vehicle width direction.

Slot holes 54 are provided in the upper transverse extension part 50 at positions outward of the coupling part 53 in the vehicle width direction. That is, the coupling part 53 is disposed between two slot holes 54. The slot holes 54 are slot-shaped through holes extending in the horizontal direction. The coupling pieces 32c formed at the end wall parts 32b of the adjacent parts 32 (the first side part 32A, the second side part 32B) of the sensor peripheral part 20 are coupled to the slot holes 54 of the low rigidity member 6. In other words, the low rigidity member 6 is coupled to the adjacent parts 32 of the sensor peripheral part 20 of the reinforcing member 5.

Three panel fixing parts 6a are provided to each of both sides in the vehicle width direction of the low rigidity member 6. In the example shown in the drawing, the panel fixing parts 6a are provided at positions in the vicinity of the cut-out part 57 of the upper side part 58, at the end portions of the lower transverse extension part 51 in the vehicle width direction, and at the lower end portions of the vertical extension parts 52. Each panel fixing part 6a has a through hole for fixing the low rigidity member 6 to the outer panel 4 by a fastening member, such as a screw, and both sides in the vehicle width direction of the low rigidity member 6 are connected to the outer panel 4. As shown in Figure 2B, the panel fixing part 6a provided in the vicinity of the cut-out part 57 of the upper side part 58 is provided with a pedestal part 4b provided between the low rigidity member 6 and the outer panel 4 for connecting the low rigidity member 6 to the outer panel 4. The front side surface 20a of the sensor peripheral part 20 approximates in the front-rear direction to the end edge of the pedestal part 4b on the outer panel 4 side with the pedestal part 4b connected to the low rigidity member 6. In the present embodiment, "approximately in the front-rear direction" indicates at least the separation dimension in the front-rear direction between the front side surface 20a of the sensor peripheral part 20 and the end edge of the pedestal part 4b on the outer panel 4 side is equal to or less than the separation dimension Δa in the front-rear direction between the front side surface 20a of the sensor peripheral part 20 and the protruding front end surface 23a of the protruding part 23. Consequently, when a colliding object collides with the vehicle 1 from the front side which is the outer side of the vehicle 1, an impact load in a collision of the colliding object can be received by both the reinforcing member 5 and the low rigidity member 6. As another mode, the front side surface 20a of the sensor peripheral part 20 approximates in the front-rear direction to the surface of the low rigidity member 6 on the side facing the outer panel 4. In the present embodiment, "approximately in the front-rear direction" indicates that at least the separation dimension in the front-rear direction between the front side surface 20a of the sensor peripheral part 20 and the surface of the low rigidity member 6 on the side facing the outer panel 4 is equal to or less than the separation dimension Δa in the front-rear direction between the front side surface 20a of the sensor peripheral part 20 and the protruding front end surface 23a of the protruding part 23. Consequently, when a colliding object collides with the vehicle 1 from the front side which is the outer side of the vehicle 1, an impact load in a collision of the colliding object can be received by both the reinforcing member 5 and the low rigidity member 6.

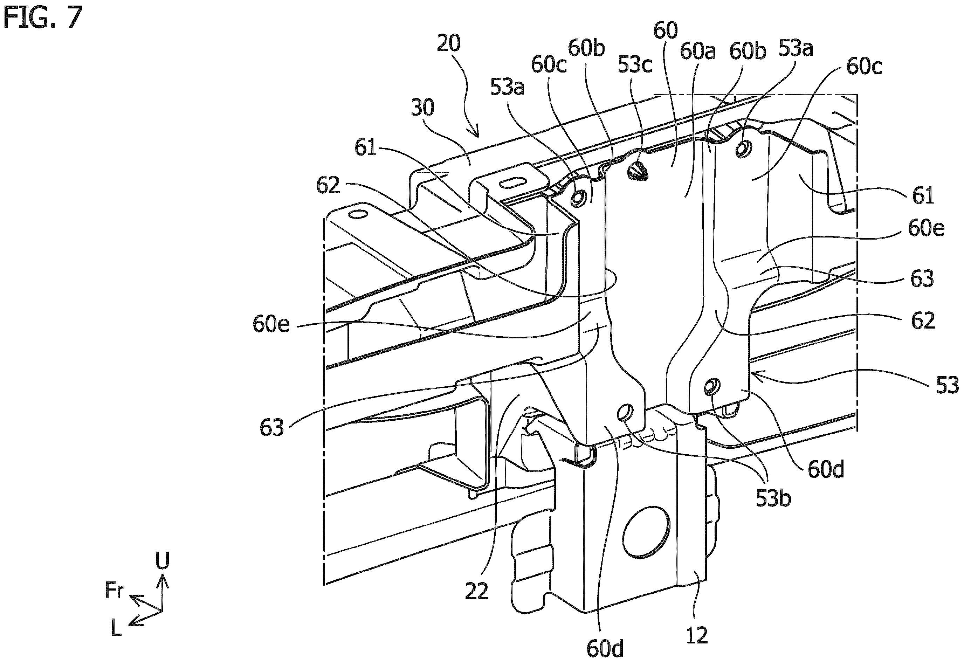

Next, the coupling part 53 provided at the center of the upper transverse extension part 50 in the vehicle width direction will be described with reference to Figure 7. Figure 7 is an enlarged perspective view showing the positional relationship between the sensor peripheral part 20 of the reinforcing member 5 and the coupling part 53, as viewed from the back side. The coupling part 53 is disposed on the back side of the sensor peripheral part 20, which is the side opposite to the side facing the outer panel 4, and the coupling part 53 couples the upper wall 30 and the lower wall 31 of the sensor peripheral part 20 to each other, the upper wall 30 and the lower wall 31 being the pair of facing parts that face each other.

The coupling part 53 includes a coupling surface part 60 extending in the up-down direction, and side wall surface parts 61 which are bent toward the back surface side from both ends of the coupling surface part 60 in the vehicle width direction. The coupling surface part 60 extends in the up-down direction, and has, in transverse cross section, a hat shape that protrudes toward the outer side (front side) which is the outer panel 4 side. The coupling surface part 60 includes a first surface part 60a located at the center in the vehicle width direction, first connecting surface parts 60b which are bent toward the back surface side from both ends of the first surface part 60a in the vehicle width direction, second surface parts 60c which are bent outward in the vehicle width direction from the upper parts of the rear ends of the first connecting surface parts 60b, and third surface parts 60d which are bent outward in the vehicle width direction from the lower parts of the rear ends of the first connecting surface parts 60b. The second surface parts 60c are located on the outer side (front side), which is the outer panel 4 side, relative to the third surface parts 60d, and the second surface parts 60c and the third surface parts 60d are connected to each other by second connecting surface parts 60e. That is, the coupling surface part 60 includes first stepped parts 62, each of which is a stepped part extending in the up-down direction and formed into a stepped shape in the front-rear direction by the first surface part 60a, the first connecting surface part 60b, the second surface part 60c, and the third surface part 60d. The width of the first surface part 60a in the vehicle width direction is not constant in the up-down direction, and the width in the vehicle width direction of the lower part of the first surface part 60a is smaller than the width in the vehicle width direction of the upper part of the first surface part 60a. The coupling surface part 60 also includes second stepped parts 63 each of which is a stepped part extending in the vehicle width direction and formed into a stepped shape in the front-rear direction by the second surface part 60c, the second connecting surface part 60e, and the third surface part 60d. The lower part of the coupling surface part 60 also extends in the up-down direction, and has, in transverse cross section, a hat shape that protrudes toward the outer side (front side) which is the outer panel 4 side. A protruding part 64 at the lower part of the coupling surface part 60 has a smaller dimension in the vehicle width direction than other portions, the protruding part 64 being the protruding part protruding toward the rear side and having a hat shape in cross section (see Figure 6 and Figure 7).

The upper part of each second surface part 60c has an upper connection hole 53a for connecting the coupling part 53 to the upper wall 30 of the sensor peripheral part 20. The upper part of the first surface part 60a has a positioning hole 53c for positioning the coupling part 53 with respect to the sensor peripheral part 20. The positioning hole 53c is disposed between two upper connection holes 53a. The lower part of each third surface part 60d has a lower connection hole 53b for connecting the coupling part 53 to the lower wall 31 of the sensor peripheral part 20.

The upper connection holes 53a provided at the upper parts of the second surface parts 60c correspond to the upper connecting parts 30a provided to the back end surface of the upper wall 30 of the sensor peripheral part 20. The positioning hole 53c provided at the upper part of the first surface part 60a corresponds to the positioning guide 30b provided to the back end surface of the upper wall 30 of the sensor peripheral part 20. The lower connection holes 53b provided at the lower parts of the third surface parts 60d correspond to the lower connecting parts 31a provided to the back end surface of the lower wall 31 of the sensor peripheral part 20.

The coupling part 53 is connected to the upper connecting parts 30a of the sensor peripheral part 20 via the upper connection holes 53a by screws, and is connected to the lower connecting parts 31a of the sensor peripheral part 20 via the lower connection holes 53b by screws. As a result, the back end surface of the upper wall 30 of the sensor peripheral part 20 is coupled to the back end surface of the lower wall 31 of the sensor peripheral part 20 by the coupling part 53. That is, the coupling part 53 couples the upper wall 30 and the lower wall 31 of the sensor peripheral part 20 to each other, the upper wall 30 and the lower wall 31 being disposed in such a way as to face each other in the up-down direction.

The coupling part 53 of the low rigidity member 6 couples the upper wall 30 and the lower wall 31 of the sensor peripheral part 20 of the reinforcing member 5 to each other, and hence, the rigidity of the sensor peripheral part 20 is increased. In the present embodiment, although the coupling part 53 couples the upper wall 30 and the lower wall 31 disposed in such a way as to face each other in the up-down direction, the configuration is not always limited to such a configuration. For example, the coupling part 53 may couple the first side part 32A and the second side part 32B of the sensor peripheral part 20, which are disposed in such a way as to face each other in the vehicle width direction. Also in this case, the first side part 32A and the second side part 32B are coupled to each other by the coupling part 53, and hence, the rigidity of the sensor peripheral part 20 is increased.

The coupling surface part 60 includes the first stepped parts 62 extending in the up-down direction, and couples the upper wall 30 and the lower wall 31 of the sensor peripheral part 20, which are disposed in such a way as to face each other in the up-down direction. Therefore, the rigidity of the coupling part 53 in the up-down direction is increased, thus deformation of the coupling part 53 in the up-down direction can be reduced, and hence, it is possible to reduce displacement of the sensor peripheral part 20, such as deviation in the up-down direction of the position of the sensor device 9 mounted on the sensor peripheral part 20. The vehicle 1 vibrates in the up-down direction during traveling, and hence, such a configuration is particularly effective. The lower transverse extension part 51 disposed at the lower part of the low rigidity member 6 is not coupled to the coupling part 53, but is connected to the outer panel 4 via the panel fixing parts 6a provided at the end portions of the lower transverse extension part 51 in the vehicle width direction. As a result, the lower transverse extension part 51 can be easily deformed in a collision, and hence, impact caused by the collision is absorbed.

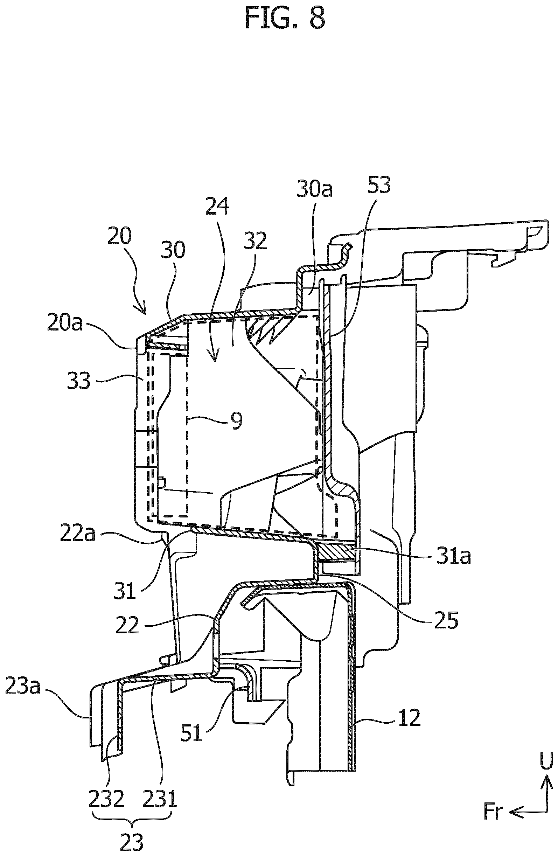

Next, the positional relationship between the reinforcing member 5, the low rigidity member 6, and the support bracket 12 will be described with reference to Figure 3, Figure 5, and Figure 8. Figure 8 is a cross-sectional view (longitudinal cross-sectional view) taken along A-A in Figure 3. As shown in Figure 3, Figure 5, and Figure 8, in the front-rear direction, the center of the lower transverse extension part 51 in the vehicle width direction is disposed between the support bracket 12 mounted at the center of the second vehicle body frame member 3b in the vehicle width direction and the lower support part 22 provided at the lower part of the sensor peripheral part 20 provided at the center of the reinforcing member 5 in the vehicle width direction. That is, the center of the lower transverse extension part 51 in the vehicle width direction, which is the lower part of the low rigidity member, is disposed, in the front-rear direction, on the side facing the outer panel 4 relative to the support bracket 12, and in such a way as to overlap the support bracket 12 in the vehicle width direction and the up-down direction. The parts of the lower transverse extension part 51 on both sides in the vehicle width direction are disposed so as not to overlap on the support bracket 12. The lower transverse extension part 51 is not coupled to the coupling part 53. Therefore, deformation of the low rigidity member 6 is promoted in an offset collision. In the present embodiment, although the center of the lower transverse extension part 51 in the vehicle width direction is disposed between the support bracket 12 and the lower support part 22 in the front-rear direction, the configuration is not limited to such a configuration, and the center of the lower transverse extension part 51 in the vehicle width direction may be disposed between the second vehicle body frame member 3b and the lower support part 22.

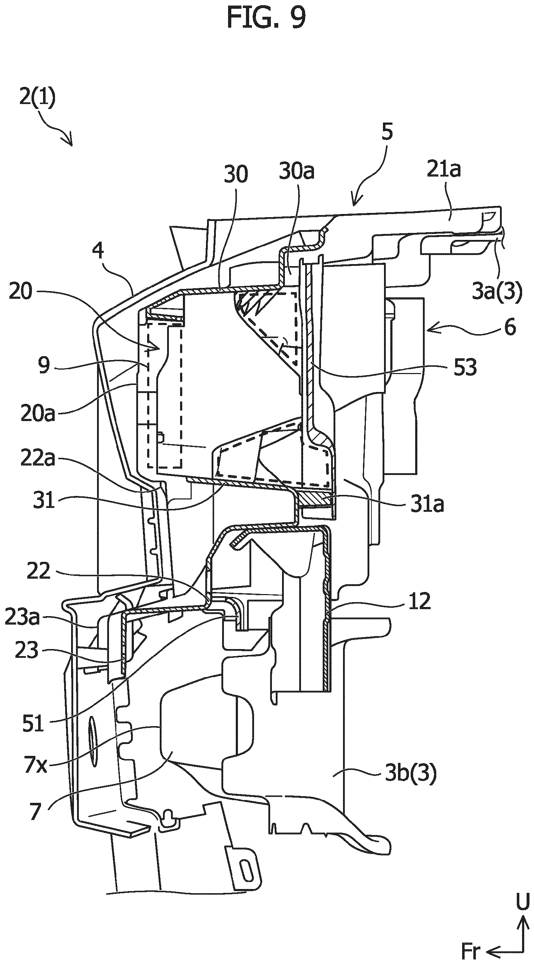

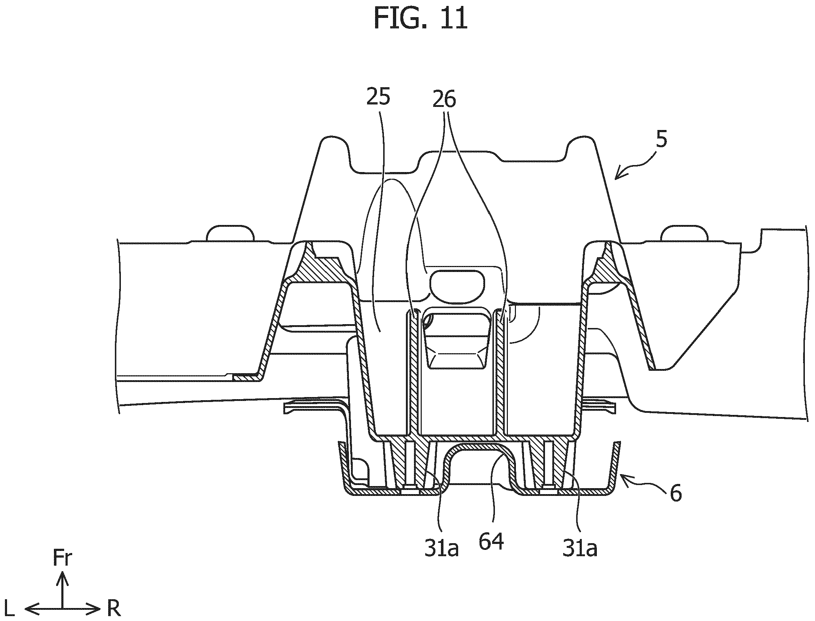

Next, the sensor containing space 24 will be described with reference to Figure 8 to Figure 11. Figure 9 is a cross-sectional view (longitudinal cross-sectional view) taken along B-B in Figure 5, Figure 10 is a cross-sectional view (transverse cross-sectional view) taken along C-C in Figure 5, and Figure 11 is a cross-sectional view (transverse cross-sectional view) taken along D-D in Figure 5. In Figure 10 and Figure 11, illustration of the outer panel 4 and the second vehicle body frame member 3b is omitted.

The sensor containing space 24 is surrounded by the upper wall 30, the lower wall 31, the first side part 32A, the second side part 32B, and the sensor mounting wall 33, and the back end surface of the upper wall 30 and the back end surface of the lower wall 31 are coupled to each other by the coupling part 53. That is, the sensor containing space 24 is formed by the sensor mounting wall 33, the upper wall 30, the lower wall 31, and the coupling part 53 when viewed in longitudinal cross section, and the sensor containing space 24 is formed by the sensor mounting wall 33, the first side part 32A, the second side part 32B, and the coupling part 53 when viewed in transverse cross section. The entirety or a part of the open part 34 which is open in the sensor mounting wall 33 is covered by the sensor bracket 11.

Accordingly, as shown by a broken line in Figure 8, at least a portion of the sensor containing space 24 is surrounded by the sensor mounting wall 33 or the sensor bracket 11, the upper wall 30, the lower wall 31, and the coupling part 53 when the sensor containing space 24 is viewed from the lateral side. Therefore, the rigidity of the sensor peripheral part 20, on which the sensor device 9 is mounted, is effectively increased, and displacement of the sensor peripheral part 20 is effectively reduced.

As shown by a broken line in Figure 9, at least a portion of the sensor containing space 24 is surrounded by the upper peripheral wall part 32d of the second side part 32B (or the first side part 32A), the upper wall 30, and the coupling part 53 when the sensor containing space 24 is viewed from the lateral side. At least a portion of the sensor containing space 24 is surrounded by the lower peripheral wall part 32e of the second side part 32B (or the first side part 32A), the lower wall 31, and the coupling part 53 when the sensor containing space 24 is viewed from the lateral side. Therefore, the rigidity of the sensor peripheral part 20 is more effectively increased, and displacement of the sensor peripheral part 20 is more effectively reduced.

As shown by a broken line in Figure 10, at least a portion of the sensor containing space 24 is surrounded by the sensor mounting wall 33 or the sensor bracket 11, the first side part 32A, the second side part 32B, and the coupling part 53 when the sensor containing space 24 is viewed from the upper side. Therefore, the rigidity of the sensor peripheral part 20, on which the sensor device 9 is mounted, is further effectively increased, and displacement of the sensor peripheral part 20 is further effectively reduced.

As shown in Figure 10, the coupling pieces 32c provided on both sides in the vehicle width direction of the sensor peripheral part 20 of the reinforcing member 5 are merely inserted into the pair of slot holes 54 provided to the low rigidity member 6. The side reinforcing parts 21 on both left and right sides of the reinforcing member 5 are supported by the first vehicle body frame member 3a (see Figure 2A). The upper side parts 58 on both sides in the vehicle width direction of the low rigidity member 6 are connected to the outer panel 4 via the panel fixing parts 6a. Therefore, in an offset collision, the coupling pieces 32c provided on both sides in the vehicle width direction can be easily removed from the pair of slot holes 54 provided to the low rigidity member 6. Accordingly, in an offset collision, deformation of the low rigidity member 6 on both sides in the vehicle width direction is easily promoted, and impact in the collision is absorbed by the deformation of the low rigidity member 6. The coupling part 53 of the low rigidity member 6 couples the upper wall 30 and the lower wall 31 of the sensor peripheral part 20, which are disposed in such a way that they face each other in the up-down direction, and hence, the impact load in a collision received by the low rigidity member 6 is received by the first vehicle body frame member 3a via the reinforcing member 5.

As shown in Figure 5, the coupling surface part 60 of the coupling part 53 includes the pair of first stepped parts 62, which are stepped parts extending in the up-down direction, and the pair of first stepped parts 62 are located on the outer side in the vehicle width direction relative to the center of the coupling surface part 60 in the vehicle width direction. Therefore, when the coupling pieces 32c provided on both sides in the vehicle width direction are removed from the pair of slot holes 54 provided to the low rigidity member 6 in an offset collision, deformation of the coupling surface part 60 in the vehicle width direction is promoted.

Figure 11 shows a transverse cross section of the center lower part of the reinforcing member 5 and the low rigidity member 6 in the vehicle width direction, and the two vertical ribs 26 extending in the up-down direction are provided to the recessed part 25 in such a way as to be separate from each other in the vehicle width direction. At least one of the two vertical ribs 26 is disposed in such a way as to overlap on the lower connecting part 31a in the vehicle width direction and the up-down direction. Therefore, the rigidity of the sensor peripheral part 20 is increased, and hence, deformation of the sensor peripheral part 20 is reduced. The protruding part 64 at the lower part of the coupling surface part 60 is disposed between the lower connecting parts 31a of the lower wall 31 in the vehicle width direction in such a way as to overlap the lower wall 31 in the front-rear direction. Therefore, the coupling part 53 can be easily positioned when the coupling part 53 is connected to the upper wall 30 and the lower wall 31, and deviation of the position of the coupling part 53 is reduced.

As described above, in the present embodiment, the vehicle structure 2 includes the outer panel 4 configured to form the design surface on the outer side of the vehicle and supported by the vehicle structural body 3 of the vehicle 1, the reinforcing member 5 configured to reinforce the outer panel 4 from the back surface side of the outer panel 4, the sensor device 9 mounted on the reinforcing member 5 and configured to sense the external environment of the vehicle, and the low rigidity member 6 having rigidity lower than the rigidity of the vehicle structural body 3 and disposed adjacent to the reinforcing member 5. The sensor peripheral part 20 which is a portion of the reinforcing member 5 on the periphery of the sensor device 9 is coupled to the low rigidity member 6.

With such a configuration, the support rigidity of the sensor peripheral part 20 is increased, and hence, displacement of the sensor peripheral part 20 caused by vibrations or the like during traveling is reduced. Accordingly, the vehicle structure 2 of the present embodiment can reduce a decrease in sensing accuracy of the sensor by reducing displacement of the sensor peripheral part 20 of the reinforcing member 5, which reinforces the outer panel 4.

In the present embodiment, the sensor peripheral part 20 includes the pair of facing parts that face each other (the upper wall 30 and the lower wall 31, the first side part 32A and the second side part 32B), and the low rigidity member 6 includes the coupling part 53 which couples the pair of facing parts to each other.

With such a configuration, the pair of facing parts of the sensor peripheral part 20 are coupled to each other by the coupling part 53, and hence, the rigidity of the sensor peripheral part 20 is increased.

In the present embodiment, the sensor peripheral part 20 includes, as the pair of facing parts, the upper wall 30 and the lower wall 31 disposed in such a way that they face each other in the up-down direction, the sensor device 9 is disposed between the upper wall 30 and the lower wall 31, the coupling part 53 includes the coupling surface part 60 extending in the up-down direction, and the coupling surface part 60 includes the first stepped parts 62 as the stepped parts extending in up-down direction.

With such a configuration, the rigidity of the coupling part 53 in the up-down direction is increased, thus deformation of the coupling part 53 in the up-down direction is reduced, and hence, it is possible to reduce displacement of the sensor peripheral part 20, such as deviation in the up-down direction of the position of the sensor device 9 mounted on the sensor peripheral part 20. The vehicle 1 vibrates in the up-down direction during traveling, and hence, such a configuration is particularly effective.

In the present embodiment, the sensor peripheral part 20 includes, on the side facing the outer panel 4, the sensor mounting wall 33 on which the sensor device 9 (the sensor bracket 11 in the present embodiment) is mounted, the sensor peripheral part 20 includes, as the pair of facing parts, the upper wall 30 and the lower wall 31 disposed in such a way that they face each other in the up-down direction, the coupling part 53 is disposed on the side of the sensor peripheral part 20 opposite to the side facing the outer panel 4, the sensor containing space 24 is formed by the sensor mounting wall 33, the upper wall 30, the lower wall 31, and the coupling part 53 when viewed in longitudinal cross section, and at least a portion of the sensor containing space 24 is surrounded by the sensor mounting wall 33, the upper wall 30, the lower wall 31, and the coupling part 53 when the sensor containing space 24 is viewed from the lateral side.

With such a configuration, the rigidity of the sensor peripheral part 20 in longitudinal cross section is increased, and displacement of the sensor peripheral part 20 is effectively reduced.

In the present embodiment, the sensor peripheral part 20 includes, as the pair of facing parts, the first side part 32A and the second side part 32B disposed in such a way that they face each other in the vehicle width direction, the sensor device 9 is disposed between the first side part 32A and the second side part 32B, the sensor containing space 24 is formed by the sensor mounting wall 33, the first side part 32A, the second side part 32B, and the coupling part 53 when viewed in transverse cross section, and at least a portion of the sensor containing space 24 is surrounded by the sensor mounting wall 33 or the sensor bracket 11, the first side part 32A, the second side part 32B, and the coupling part 53 when the sensor containing space 24 is viewed from the upper side.

With such a configuration, the rigidity of the sensor peripheral part 20 in transverse cross section is increased, and displacement of the sensor peripheral part 20 is more effectively reduced.

In the present embodiment, the back surface of the sensor mounting wall 33 is provided with the sensor fixed parts 35 to which the sensor device 9 (the sensor bracket 11 in the present embodiment) is fixed, the sensor peripheral part 20 includes the adjacent parts 32 (the first side part 32A, the second side part 32B) disposed adjacent to the sensor fixed parts 35 and extending in the front-rear direction from the back surface of the sensor mounting wall 33, and the low rigidity member 6 is coupled to the adjacent parts 32.

With such a configuration, the rigidity of the sensor fixed parts 35 of the sensor peripheral part 20 and the rigidity of the peripheries of the sensor fixed parts 35 are increased, and displacement of the sensor peripheral part 20 is further effectively reduced.

In the present embodiment, each adjacent part 32 includes the peripheral wall part 32a having a cylindrical shape, and the end wall part 32b located at the end of the peripheral wall part 32a on the side opposite to the end on the outer panel 4 side.

With such a configuration, the rigidity of the adjacent part 32 is increased, and displacement of the sensor peripheral part 20 is further reduced.

In the present embodiment, the adjacent parts 32 are disposed on the left side and the right side of the sensor device 9 (the sensor bracket 11 in the present embodiment), and the low rigidity member 6 is coupled to the adjacent parts 32 on the left side and the right side.

With such a configuration, the rigidity of the sensor peripheral part 20 is further increased, and displacement of the sensor peripheral part 20 is effectively reduced.

Although the embodiment of the present invention and the modification of the embodiment have been described heretofore, the present invention is not limited to the embodiment and the modification of the embodiment and in addition, various modifications and changes may be further made within the scope of the present invention.

For example, in the embodiment, although the vehicle structure 2 is used as the structure for the front part of the vehicle 1, the configuration is not limited to the above, and the vehicle structure 2 may be used as the structure for the rear part of the vehicle 1. In this case, in the above-mentioned description, "front side" is replaced with "rear side", and in the front-rear direction, "outer side" indicates the rear side, "back side" indicates the front side, "outer surface" indicates the rear surface, and "back surface" indicates the front surface.

Although the sensor peripheral part 20 includes two sets of pairs of facing parts that face each other, the configuration is not limited to the above, and the sensor peripheral part 20 may include only one set of the pair of facing parts. That is, the sensor peripheral part 20 may include only the upper wall 30 and the lower wall 31 as the pair of facing parts, or may include only the first side part 32A and the second side part 32B as the pair of facing parts. That is, it is sufficient for the sensor peripheral part 20 to include at least one set of the pair of facing parts that face each other. A direction in which the pair of facing parts face each other is not limited to the up-down direction or the vehicle width direction, and may be an oblique direction intersecting with the up-down direction and the vehicle width direction. In this case, although not shown in the drawing, the respective facing parts are formed of, for example, a horizontal part extending in the horizontal direction and a vertical part extending in the vertical direction, and the horizontal part and the vertical part form an L-shape when viewed from one side in the vehicle front-rear direction. In the case in which desired rigidity of the sensor peripheral part 20 is ensured by coupling the horizontal part and the vertical part to each other by the coupling part 53, the sensor peripheral part 20 may include, instead of the pair of facing parts, for example, a part formed of the horizontal part and the vertical part, the horizontal part and the vertical part being coupled to each other by the coupling part 53 in the part.

### [Reference Signs List]

- 1: vehicle
- 2: vehicle structure
- 3: vehicle structural body
- 3a: first vehicle body frame member
- 3a1: front flange
- 3b: second vehicle body frame member
- 4: outer panel
- 4a: front grille
- 4b: pedestal part
- 5: reinforcing member
- 6: low rigidity member
- 6a: panel fixing part
- 7: impact absorbing member
- 8: bumper face
- 9: sensor device
- 10: sensor
- 11: sensor bracket
- 12: support bracket
- 20: sensor peripheral part
- 20a: front side surface
- 21: side reinforcing part
- 21a: side reinforcing part upper wall
- 21b: side reinforcing part front wall
- 21b1: through hole
- 22: lower support part
- 22a: front side surface
- 23: protruding part
- 23a: protruding front end surface
- 231: front-rear wall
- 232: protruding end wall
- 233: panel fixing hole
- 24: sensor containing space
- 25: recessed part
- 25a: depth side wall
- 25b: side wall
- 25c: recessed-shape-forming lower wall
- 26: vertical rib
- 27: lower bulging part
- 30, 31: upper wall and lower wall (pair of facing parts)
- 30: upper wall
- 30a: upper connecting part
- 30b: positioning guide
- 31: lower wall
- 31a: lower connecting part
- 32A,: 32B first side part and second side part (pair of facing parts)
- 32A: first side part
- 32B: second side part
- 32: adjacent part
- 32a: peripheral wall part
- 32b: end wall part
- 32c: coupling piece
- 32d: upper peripheral wall part
- 32e: lower peripheral wall part
- 32f: vertical peripheral wall part
- 33: sensor mounting wall
- 34: opening part
- 35: sensor fixed part
- 36: connecting wall
- 50: upper transverse extension part
- 51: lower transverse extension part
- 52: vertical extension part
- 53: coupling part
- 53a: upper connection hole
- 53b: lower connection hole
- 53c: positioning hole
- 54: slot hole
- 55: vertical wall part
- 57: cut-out part
- 58: upper side part
- 60: coupling surface part
- 60a: first surface part
- 60b: first connecting surface part
- 60c: second surface part
- 60d: third surface part
- 60e: second connecting surface part
- 61: side wall surface part
- 62: first stepped part (stepped part)
- 63: second stepped part
- 64: protruding part
- Δa: separation dimension
- Δb: separation dimension

## Claims

1. A vehicle structure comprising:
an outer panel configured to form a design surface on an outer side of a vehicle and supported by a vehicle structural body of the vehicle;
a reinforcing member configured to reinforce the outer panel from a back surface side of the outer panel; and
a sensor device mounted on the reinforcing member and configured to sense an external environment of the vehicle, the vehicle structure **characterized in that**
the vehicle structure includes a low rigidity member having rigidity lower than rigidity of the vehicle structural body, and disposed adjacent to the reinforcing member, and
a sensor peripheral part which is a portion of the reinforcing member on a periphery of the sensor device is coupled to the low rigidity member.

2. The vehicle structure according to claim 1, wherein the sensor peripheral part includes a pair of facing parts that face each other, and
the low rigidity member includes a coupling part configured to couple the pair of facing parts to each other.

3. The vehicle structure according to claim 2, wherein the sensor peripheral part includes, as the pair of facing parts, an upper wall and a lower wall disposed in such a way as to face each other in an up-down direction,
the sensor device is disposed between the upper wall and the lower wall,
the coupling part includes a coupling surface part extending in the up-down direction, and
the coupling surface part includes a stepped part extending in the up-down direction.

4. The vehicle structure according to claim 2, wherein
the sensor peripheral part includes a sensor mounting wall on a side facing the outer panel, the sensor device being mounted on the sensor mounting wall,
the sensor peripheral part includes, as the pair of facing parts, an upper wall and a lower wall disposed in such a way as to face each other in an up-down direction,
the sensor device is disposed between the upper wall and the lower wall,
the coupling part is disposed on a side of the sensor peripheral part opposite to a side facing the outer panel,
a sensor containing space in which the sensor device is contained is formed by the sensor mounting wall, the upper wall, the lower wall, and the coupling part, and
at least a portion of the sensor containing space is surrounded by the sensor mounting wall, the upper wall, the lower wall, and the coupling part when the sensor containing space is viewed from a lateral side.

5. The vehicle structure according to claim 2, wherein the sensor peripheral part includes a sensor mounting wall on a side facing the outer panel, a sensor bracket of the sensor device being mounted on the sensor mounting wall,
the sensor peripheral part includes, as the pair of facing parts, a first side part and a second side part disposed in such a way as to face each other in a vehicle width direction,
the sensor device is disposed between the first side part and the second side part,
the coupling part is disposed on a side of the sensor peripheral part opposite to the side facing the outer panel,
a sensor containing space in which the sensor device is contained is formed by the sensor mounting wall, the first side part, the second side part, and the coupling part, and
at least a portion of the sensor containing space is surrounded by the sensor mounting wall or the sensor bracket, the first side part, the second side part, and the coupling part when the sensor containing space is viewed from an upper side.

6. The vehicle structure according to claim 1, wherein
the sensor peripheral part includes a sensor mounting wall on a side facing the outer panel, the sensor device being mounted on the sensor mounting wall,
a back surface of the sensor mounting wall is provided with a sensor fixed part to which the sensor device is fixed,
the sensor peripheral part includes an adjacent part disposed adjacent to the sensor fixed part, and extending in a front-rear direction from the back surface of the sensor mounting wall, and
the low rigidity member is coupled to the adjacent part.

7. The vehicle structure according to claim 6, wherein the adjacent part includes a peripheral wall part having a cylindrical shape and an end wall part located at an end of the peripheral wall part on a side opposite to an end on a side close to the outer panel.

8. The vehicle structure according to claim 6 or 7, wherein the adjacent parts are disposed on a left side and a right side of the sensor device, and
the low rigidity member is coupled to the adjacent part on the left side and to the adjacent part on the right side.
